# EUROPEAN PATENT APPLICATION

(11) **EP 4 654 015 A1**
(43) Date of publication of application: **26.11.2025**
(21) Application number: 25703363.9
(22) Date of filing: 06.02.2025
(51) Int. Cl.: G06F 9/50, G06F 9/48, G06F 9/30, G06F 9/52

(54) **ELECTRONIC DEVICE, METHOD, AND NON-TRANSITORY COMPUTER-READABLE RECORDING MEDIUM FOR IDENTIFYING PROCESS FOR RENDERING**

(30) Priority: 08.04.2024 KR 20240047415; 20.05.2024 KR 20240065255
(71) Applicant: Samsung Electronics Co., Ltd., Suwon-si, Gyeonggi-do 16677 (KR)
(72) Inventor: KIM, Kiljae, Suwon-si, Gyeonggi-do 16677 (KR); KIM, Kookjin, Suwon-si, Gyeonggi-do 16677 (KR); KIM, Jaeho, Suwon-si, Gyeonggi-do 16677 (KR); SONG, Hyunkeun, Suwon-si, Gyeonggi-do 16677 (KR)
(74) Representative: Walaski, Jan Filip
(86) International application number: PCT/KR2025/001786
(87) International publication number: WO 2025/216414

(57) **Abstract**

An electronic device includes a display, a processor including a first core running in a first frequency range, and a second core running in a second frequency range having a second maximum frequency less than a first maximum frequency of the first frequency range, and memory, including one or more storage mediums, storing instructions. The electronic device identifies a request of a first process among at least one process of an application. The electronic device changes a core for processing the first process to the first core among the first core and the second core based on a process indicated by the request being related to a second process for outputting an image to the display. The electronic device maintains the core for processing the first process based on the process being related to a third process distinguished from the second process.

## Description

### [Technical Field]

The following description relates to an electronic device, a method, and a non-transitory computer readable storage medium that identify a process for rendering.

### [Background Art]

Recently, the spread of various types of portable electronic devices such as a smartphone, a tablet PC, a wireless earphone, and/or a smart watch is expanding. Such portable electronic devices may include a processor (e.g., a central processing unit (CPU)). The processor may include a plurality of cores that operate based on various frequencies. The plurality of cores operating based on the various frequencies may be classified into different clusters according to ranges of an operating frequency.

### [Disclosure]

### [Technical Solution]

An electronic device is disclosed. The electronic device may comprise a display, a processor including a first core running in a first frequency range, and a second core running in a second frequency range having a second maximum frequency less than a first maximum frequency of the first frequency range, and memory, comprising one or more storage mediums, storing instructions. The instructions that, when executed by the at least one processor individually or collectively, may cause the electronic device to identify a request of a first process among at least one process of an application. The instructions that, when executed by the at least one processor individually or collectively, may cause the electronic device to, based on that a process indicated by the request is related to a second process for outputting an image to the display, change a core for processing the first process to the first core among the first core and the second core. The instructions that, when executed by the at least one processor individually or collectively, may cause the electronic device to, based on that the process is related to a third process different from the second process, maintain the core for processing the first process.

A method is disclosed. The method may be executed in an electronic device comprising a display, and a processor including a first core running in a first frequency range, and a second core running in a second frequency range having a second maximum frequency less than a first maximum frequency of the first frequency range. The method may comprise identifying a request of a first process among at least one process of an application. The method may comprise, based on that a process indicated by the request is related to a second process for outputting an image to the display, changing a core for processing the first process to the first core among the first core and the second core. The method may comprise, based on that the process is related to a third process different from the second process, maintaining the core for processing the first process.

A non-transitory computer readable storage medium is disclosed. The non-transitory computer readable storage medium may store one or more programs including instructions. The instructions that, when executed by a processor of an electronic device comprising a display, and the processor including a first core running in a first frequency range, and a second core running in a second frequency range having a second maximum frequency less than a first maximum frequency of the first frequency range individually or collectively, may cause the electronic device to identify a request of a first process among at least one process of an application. The instructions that, when executed by the at least one processor individually or collectively, may cause the electronic device to, based on that a process indicated by the request is related to a second process for outputting an image to the display, change a core for processing the first process to the first core among the first core and the second core. The instructions that, when executed by the at least one processor individually or collectively, may cause the electronic device to, based on that the process is related to a third process different from the second process, maintain the core for processing the first process.

### [Description of the Drawings]

FIG. 1 is a block diagram of an electronic device in a network environment.
FIG. 2 is a block diagram of an electronic device.
FIG. 3 illustrates an example of a signal flow between components included in memory.
FIG. 4 is a flowchart illustrating an operation of an electronic device.
FIG. 5 is a flowchart illustrating an operation of an electronic device.
FIG. 6 is a flowchart illustrating an operation of an electronic device.
FIG. 7 is a flowchart illustrating an operation of an electronic device.
FIG. 8 is a flowchart illustrating an operation of an electronic device.
FIG. 9 is a flowchart illustrating an operation of an electronic device.
FIG. 10 is a flowchart illustrating an operation of an electronic device.
FIG. 11 is a flowchart illustrating an operation of an electronic device.

### [Mode for Invention]

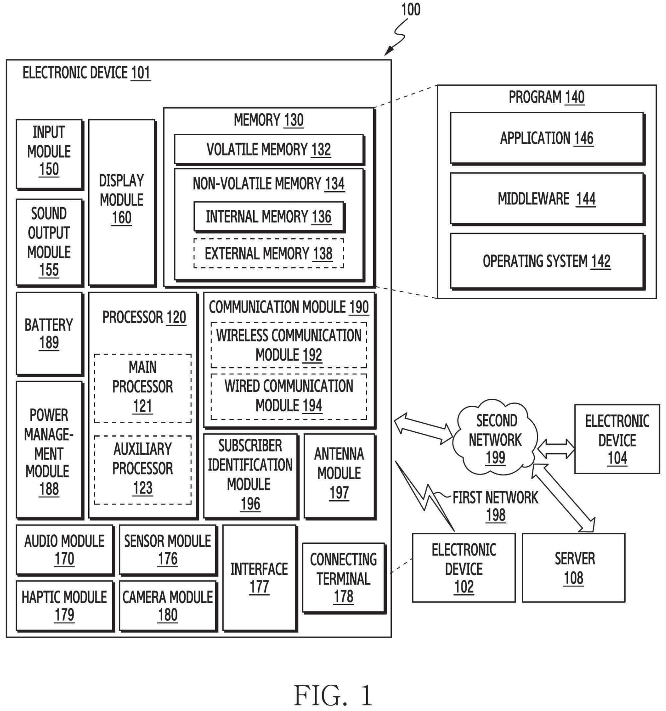

FIG. 1 is a block diagram illustrating an electronic device 101 in a network environment 100.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). The electronic device 101 may communicate with the electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. At least one of the components (e.g., the connecting terminal 178) may be omitted from the electronic device 101, or one or more other components may be added in the electronic device 101. Some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an image signal processor or a communication processor) may be implemented as part of another component (e.g., the camera module 180 or the communication module 190) functionally related to the auxiliary processor 123. The auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. The interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). The connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). The wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. The antenna module 197 may include an antenna including a radiating element composed of a conductive material or a conductive pattern formed in or on a substrate (e.g., a printed circuit board (PCB)). The antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

The antenna module 197 may form a mmWave antenna module. The mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. The external electronic device 104 may include an internet-of-things (IoT) device. The server 108 may be an intelligent server using machine learning and/or a neural network. The external electronic device 104 or the server 108 may be included in the second network 199. The electronic device 101 may be applied to intelligent services (e.g., smart home, smart city, smart car, or healthcare) based on 5G communication technology or IoT-related technology.

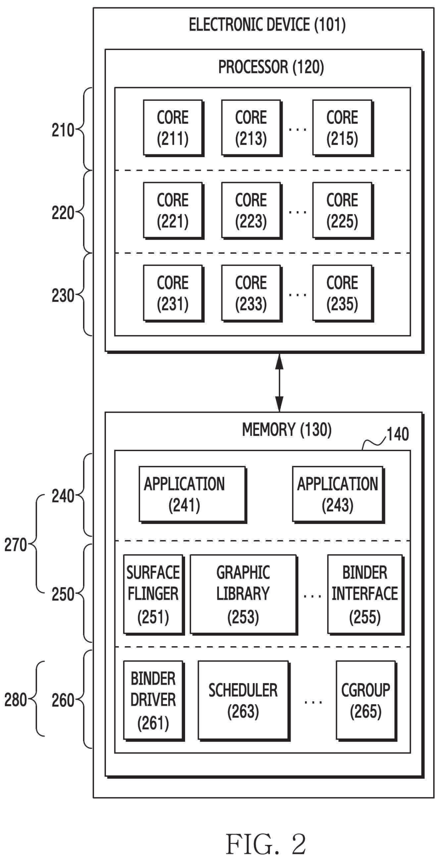

FIG. 2 is a block diagram of an electronic device.

An electronic device 101 of FIG. 2 may correspond to the electronic device 101 of FIG. 1. The electronic device 101 of FIG. 2 may include a terminal that is owned by a user. For example, the terminal may include a personal computer (PC) such as a laptop or a desktop, a smartphone, a smart pad, a tablet PC, a smartwatch, and a smart accessory such as a head-mounted device (HMD).

Referring to FIG. 2, the electronic device 101 may include a processor 120 and memory 130. The processor 120 of FIG. 2 may be substantially the same as the processor 120 of FIG. 1, or may include the processor 120 of FIG. 1. The memory 130 of FIG. 2 may be substantially the same as the memory 130 of FIG. 1, or may include the memory 130 of FIG. 1.

The processor 120 of the electronic device 101 may include a plurality of cores 211, 213, 215, 221, 223, 225, 231, 233, and 235. Each of the plurality of cores 211, 213, 215, 221, 223, 225, 231, 233, and 235 may operate in a specified frequency range. Each of the plurality of cores 211, 213, 215, 221, 223, 225, 231, 233, and 235 may be included in one cluster of a plurality of clusters 210, 220, and 230 according to the frequency range in which it operates.

The plurality of cores 211, 213, 215, 221, 223, 225, 231, 233, and 235 of the processor 120 may have different performances for improving the performance of the electronic device 101 and/or efficiently utilizing power. For example, the processor 120 may have a structure (e.g., a big-little structure) that includes a relatively high-performance core and a relatively lowperformance core together. For example, the processor 120 of the big-little structure may extend battery life by using a low-power core when performing a relatively simple task. For example, the processor 120 of the big-little structure may provide higher performance to a user by using a high-performance core when performing a relatively complex task.

A first cluster 210 may include cores operating in a first frequency range having a first maximum frequency (e.g., 3.4 GHz). A second cluster 220 may include cores operating in a second frequency range having a second maximum frequency (e.g., 3.15 GHz or 2.96 GHz) less than the first maximum frequency. A third cluster 230 may include cores operating in a third frequency range having a third maximum frequency (e.g., 2.27 GHz) less than the second maximum frequency. The number of the plurality of clusters 210, 220, and 230 is not limited to the three illustrated in FIG. 2. For example, the number of the plurality of clusters 210, 220, and 230 may be two. For example, the number of the plurality of clusters 210, 220, and 230 may be four or more.

The cluster 210 operating in a frequency range with the highest maximum frequency (e.g., 3.4 GHz) may be referred to as a prime cluster or a big cluster. The cluster 230 operating in a frequency range with the lowest maximum frequency (e.g., 2.27 GHz) may be referred to as a little cluster or an efficient cluster. The cluster 220 operating in a frequency range with a maximum frequency (e.g., 3.15 GHz or 2.96 GHz) between the highest maximum frequency and the lowest maximum frequency may be referred to as a performance cluster.

A program 140 of the memory 130 may be classified into a plurality of layers 240, 250, and 260. For example, the plurality of layers 240, 250, and 260 may include an application layer 240, a framework layer 250, and/or a kernel layer 260. However, the plurality of layers 240, 250, and 260 are not limited thereto. For example, the plurality of layers 240, 250, and 260 may further include a hardware abstraction layer.

For example, the application layer 240 may include applications 241 and 243. For example, the applications 241 and 243 may correspond to the application 146 of FIG. 1.

For example, the framework layer 250 may include a surface flinger 251, a graphic library 253, and a binder interface 255. For example, the surface flinger 251, the graphic library 253, and the binder interface 255 may correspond to the middleware 144 and/or the operating system 142 of FIG. 1.

The surface flinger 251 may synthesize at least one image (or layer) (or frame) stored in a frame buffer for each of the applications 241 and 243. The surface flinger 251 may synthesize at least one image (or layer) (or frame) stored in the frame buffer at each specified period (e.g., period according to vsync (e.g., 60 Hz)). Hereinafter, the image (or layer) (or frame) stored in the frame buffer by each of the applications 241 and 243 may be referred to as an image.

The surface flinger 251 may provide the synthesized image (or layer) (or frame) (through a hardware composer) to a display (e.g., the display module 160 of FIG. 1). The image (or layer) (or frame) synthesized by the surface flinger 251 may be referred to as a composite image.

The graphic library 253 may include graphics functions that are basically used in relation to computer graphics. For example, the graphic library 253 may be an open graphics library (OpenGL).

The binder interface 255 may include functions for interfacing programs (e.g., the applications 241 and 243, the surface flinger 251, the graphic library 253, the binder interface 255, a binder driver 261, a scheduler 263, and/or a control group (Cgroup) 265) with the binder driver 261. Interfacing with the binder driver 261 may include calling the binder driver 261 and/or a request to the binder driver 261.

For example, the kernel layer 260 may include the binder driver 261, the scheduler 263, and/or the Cgroup 265. For example, the binder driver 261, the scheduler 263, and/or the Cgroup 265 may correspond to the operating system 142 of FIG. 1.

The binder driver 261 may be a driver for a remote procedure call (or inter process communication (IPC)) (e.g., a binder call). For example, the remote procedure call (e.g., the binder call) may be run based on a function (or an application programming interface (API)) defined in the binder interface 255.

The binder driver 261 may share a message and/or data between processes. The binder driver 261 may identify the remote procedure call (e.g., the binder call) from a first process. The remote procedure call (e.g., the binder call) may be used for the message transfer from the first process to a second process and/or the data transfer from the first process to the second process. For example, the binder driver 261 may transmit the message and/or the data (or transmit an address of the memory 130 in which the message and/or the data are stored) to the second process identified based on the remote procedure call (e.g., the binder call) from the first process.

The binder driver 261 may transmit the message and/or the data based on the remote procedure call (e.g., the binder call) to the scheduler 263 based on a departing process (or a caller) and/or a destination process (or a callee) of the remote procedure call (e.g., the binder call). The binder driver 261 may transmit identification information (e.g., process identification (PID) of the caller) of the departing process (or the caller) and identification information (e.g., PID of the callee) of the destination process (or the callee) to the scheduler 263.

The scheduler 263 may schedule tasks of a process (or a thread) that is in a standby state or a ready state on the memory 130. The scheduler 263 may allocate a unit time (or a time slice) that may occupy a core to a task. For example, when a unit time of scheduling is given to the task of the process, the processor 120 may run the task of the process through a specified core for the unit time (i.e., for a time of 10 ms). The task is a unit of scheduling.

The scheduler 263 may include a plurality of schedulers. For example, the scheduler 263 may include a real time (RT) scheduler and a complete fair scheduler (CFS). However, it is not limited thereto. The scheduler 263 may further include a scheduler stop scheduler, a deadline scheduler, and an idle scheduler.

The scheduler 263 may schedule most general tasks through the CFS scheduler. The scheduler 263 may schedule tasks that need to be continuously processed while occupying a resource of a CPU (or the processor 120) (or a core) through the RT scheduler.

A task (or a task having an RT attribute) (hereinafter, an RT task) processed by the RT scheduler may always be allocated a CPU resource with priority over a task processed by the CFS scheduler. In addition, the same RT task may be allocated the CPU resource in an order (e.g., first in first out (FIFO)) of entry into a run queue (RQ). Herein, the run queue, which is internal memory (or a register) of the processor 120, may store tasks to be processed by the processor 120. The RT task may be at least one of a graphic-related task and an audio-related task requiring real-time processing.

The CFS scheduler may process a general task (or a task with a CFS attribute) (hereinafter, a CFS task) after an RT task operation is finished (or after all RT tasks in the run queue are processed). The CFS task may be scheduled by distributing time according to a nice value. Herein, the nice value may indicate a run priority (e.g., a priority value) between processes run (or loaded) in a user space 270. The CFS scheduler may determine a processing order of the CFS task by using a priority. Accordingly, a CFS task with a high priority may be operated (or run) before a CFS task with a low priority.

The Cgroup 265 may allocate a resource (e.g., processor time (or CPU time), memory, and/or a network bandwidth) to processes. The Cgroup 265 may manage resource allocation information between a resource and a process. For example, the resource allocation information may include identification (ID) (or process ID (PID)) of a process and/or ID of a thread (or thread ID (TID)). At least one thread in one process may have the same PID and a unique TID.

Programs included in the application layer 240 and/or the framework layer 250 may be run in the user space 270 of the memory 130. The programs included in the application layer 240 and/or the framework layer 250 may be allocated an independent memory area in the user space 270 of the memory 130. The independence of the memory area may indicate that another processor other than the processor allocated to the memory area may not access that area.

Programs included in the kernel layer 260 may be run in a kernel space 280. The programs included in the kernel layer 260 may share a memory area of the kernel space 280 of the memory 130. Sharing of the memory area may indicate that the processes of programs included in the kernel layer 260 may be accessed to the memory area.

The processor 120 may process a task of a process (or a thread) by using a cluster (or a core) allocated (or specified) by the scheduler 263. Herein, the process may include one main thread and at least one child thread (or a background thread) (or a worker thread).

The main thread may be in charge of a job that a user may recognize. The job that the user may recognize may include processing an input of the user. For example, the main thread may obtain the input of the user. For example, the main thread may process an update request of a user interface (UI). For example, the main thread may request the at least one child thread to update the UI when the UI needs to be updated based on an event (e.g., the user input).

The at least one child thread may be a thread for processing a complex operation or large amounts of data. The at least one child thread may be generated for a job requiring processing for a relatively long time compared to a job processed by the main thread.

A UI thread, which is an example of the child thread, may perform a drawing operation. The drawing operation in the UI thread may be an operation of transmitting an instruction set for the drawing operation of an image to another worker thread (e.g., a render thread).

The render thread, which is an example of the child thread, may draw an image. For example, the render thread may draw the image by using the graphic library 253. However, it is not limited thereto. The render thread may draw the image by using a built-in graphic library of a program. Herein, the graphic library 253 may be a basic graphic library provided by the operating system 142. The built-in graphic library may be a graphic library that is distinguished from the basic graphic library provided by the operating system 142. Alternatively, the built-in graphic library may be a graphic library that is not provided by the operating system 142.

The render thread may update the image to a frame buffer allocated to an application of the render thread. The render thread may transmit a message notifying the surface flinger 251 that the image is updated in the frame buffer through the binder driver 261.

The scheduler 263 may schedule a specified process (or a thread) (e.g., the main thread and the surface flinger 251) through the RT scheduler. For example, a task of the specified process (or the thread) (e.g., the main thread and the surface flinger 251) may be the RT task.

The scheduler 263 may schedule a process (or the render thread) for rendering through the CFS scheduler. The process (or the render thread) for rendering may be the CFS task (or a normal task).

The scheduler 263 may allocate a foreground process of a top-app to the big cluster. However, in case that all the foreground processes of the top-app are assigned to the big cluster, current consumption of the processor 120 may increase. Accordingly, in order to prevent (or minimize) a frame drop of the top-app, an operation of allocating a partial process among all the foreground processes of the top-app to the big cluster may be required. The top-app may be an application having the focus among applications run in the electronic device 101. For example, the top-app may be an application having (or generating) a screen (or view) that receives a user input. For example, in the case that screens of two or more applications are displayed on the display, only one application may be the top-app. For example, the top-app may be an application having the top activity.

In case that the render thread generates an image through the basic graphic library provided by the operating system 142, the electronic device 101 may accurately specify the render thread based on the remote procedure call between the render thread and the basic graphic library. However, it may be difficult for the electronic device 101 to accurately specify a relation thread (e.g., a thread for loading data (or an image) used in the render thread) related to the render thread (or having dependence on the render thread). Accordingly, the relation thread may not be processed in the big cluster, and in this case, the frame drop of the top-app may occur by the relation thread.

In addition, in case that the render thread generates an image through a graphic library other than the basic graphic library (e.g., a built-in graphic library of a game application or a built-in graphic library of an Internet browser), it may be difficult for the electronic device 101 to accurately specify the render thread. Accordingly, the render thread may not be processed in the big cluster, and in this case, the frame drop of the top-app may occur by the render thread.

In addition, even when the render thread is specified, in case that the render thread only updates a frame of the frame buffer and the relation thread of the render thread generates an actual image, the relation thread that generates the actual image may not be processed in the big cluster. In this case, the frame drop of the top-app may be generated by the relation thread.

Finally, since a name of the render thread may be freely changed by a developer, it may not be easy to specify the render thread through the name of a thread.

Accordingly, a method for specifying a process and/or a thread for performing actual rendering in an application and processing the specified processor and/or thread in the big cluster may be required.

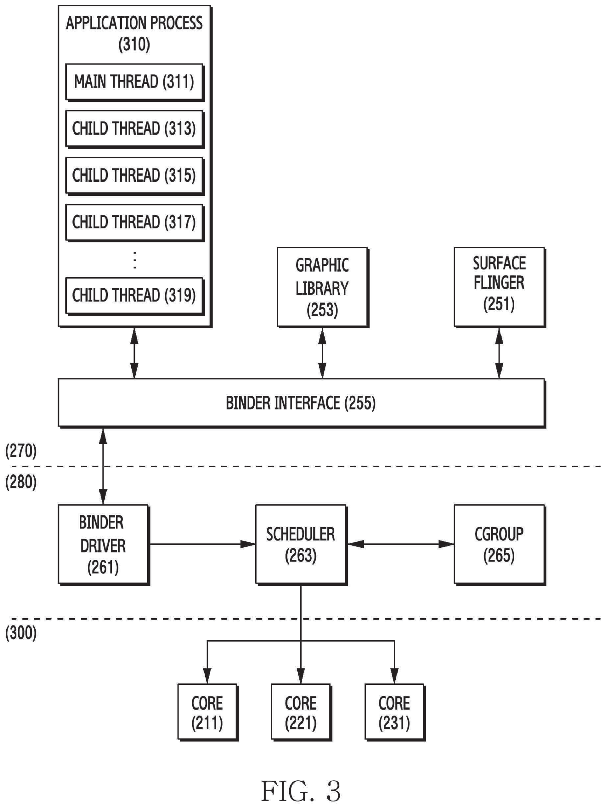

Hereinafter, referring to FIG. 3, an operation of the electronic device 101 for specifying the process and/or the thread for performing actual rendering in the application and for processing the specified processor and/or thread in the big cluster will be described.

FIG. 3 illustrates an example of a signal flow between components included in memory.

FIG. 3 may be described with reference to FIG. 1 and FIG. 2. The components of FIG. 3 may be included as part of an electronic device 101.

A binder driver 261 may identify a request (e.g., a remote procedure call) of an application process 310. For example, the request (e.g., the remote procedure call) may be a binder call for message transfer and/or data transfer to another process other than the application process 310. The remote procedure call may include identification information (e.g., PID) of a caller and identification information (e.g., PID) of a callee. The request (e.g., the remote procedure call) may include a message and/or data (or an address of memory 130 in which the message and/or the data are recorded) for the caller to transmit to the callee. However, it is not limited thereto.

For example, the binder driver 261 may transmit the request from the application process 310 to the callee. For example, the callee who receives the request from the application process 310 may transmit a response to the request to the caller through the binder driver 261.

For example, the binder driver 261 may transmit at least part of information included in the request from the application process 310 to a scheduler 263. For example, the binder driver 261 may transmit the identification information of the caller and/or the identification information of the callee included in the request to the scheduler 263.

The scheduler 263 may determine a cluster to process the application process 310 based on the request from the application process 310. For example, the scheduler 263 may determine the cluster to process the application process 310 based on at least part of information (e.g., the identification information of the caller and/or the identification information of the callee) included in the remote procedure call from the binder driver 261.

The scheduler 263 may determine whether the application process 310 is a process of a top-app based on at least part of the information (e.g., the identification information of the caller). The scheduler 263 may determine whether identification information included in resource allocation information of the top-app managed by a Cgroup 265 corresponds to the identification information of the caller. The scheduler 263 may determine that the application process 310 is the process of the top-app based on the identification information included in the resource allocation information of the top-app corresponding to the identification information of the caller.

The scheduler 263 may determine that the application process 310 is the process of the top-app based on identifying that a resource allocated to the application process 310 is included in a resource for the top-app (or an application having a top activity) based on the resource allocation information of the top-app managed by the Cgroup 265.

The scheduler 263 may determine a priority value (or a graphic count value) for determining the cluster to process the application process 310 based on a result of determining whether the application process 310 is the process of the top-app. The priority value (or the graphic count value) may be an integer value within a specified range (e.g., 0 to 20).

The scheduler 263 may determine whether the callee of the request is a specified process (or a processor for outputting an image to a display (e.g., the display module 160 of FIG. 1)) (e.g., a surface flinger 251) based on at least part of information (e.g., the identification information of the callee).

The scheduler 263 may determine whether identification information included in resource allocation information of the surface flinger 251 managed by the Cgroup 265 corresponds to the identification information of the callee. The scheduler 263 may determine that the callee is the surface flinger 251 based on the identification information included in the resource allocation information of the surface flinger 251 corresponding to the identification information of the callee. The scheduler 263 may determine that the callee is the surface flinger 251 based on a resource allocated to the callee being included in a resource allocated to the surface flinger 251.

The scheduler 263 may determine the priority value (or the graphic count value) for determining the cluster to process the application process 310 based on a result of determining whether the callee is the surface flinger 251.

For example, the scheduler 263 may increase the priority value of the application process 310 by a specified value (e.g., 2) in case that the application process 310 generating the request is the process of the top-app. For example, the scheduler 263 may reduce the priority value of the application process 310 by another specified value (e.g., 1) in case that the application process 310 generating the request is not the process of the top-app.

For example, the scheduler 263 may increase the priority value of the application process 310 by the specified value (e.g., 2) when the callee is the surface flinger 251. For example, the scheduler 263 may reduce the priority value of the application process 310 by the other specified value (e.g., 1) when the callee is not the surface flinger 251.

For example, the scheduler 263 may increase the priority value of the application process 310 by the specified value (e.g., 2) when all of a plurality of conditions are satisfied. For example, the scheduler 263 may reduce the priority value of the application process 310 by the other specified value (e.g., 1) when at least one of the plurality of conditions is not satisfied. Herein, the plurality of conditions may include a first condition that the application process 310 generating the request is the process of the top-app, and a second condition that the callee is the surface flinger 251.

The scheduler 263 may determine a cluster of a hardware layer 300 to process a process, based on a priority value of the process.

For example, the scheduler 263 may determine to change the cluster processing a process to a big cluster (e.g., a first cluster 210) based on the priority value of the process being greater than or equal to a reference value (e.g., 1). For example, an operation of changing the cluster processing the process to the big cluster may be referred to as migration (or big cluster migration). Hereinafter, a process in which a priority value is greater than or equal to the reference value (e.g., 1) may be referred to as a render process. A process in which a priority value is less than the reference value (e.g., 1) may be referred to as a non-render process. However, it is not limited thereto.

For example, the scheduler 263 may determine to maintain a cluster processing the non-render process based on a priority value being less than the reference value. However, it is not limited thereto. For example, the scheduler 263 may change the cluster processing the non-render process to a cluster (e.g., a little cluster (or an efficiency cluster) (e.g., a third cluster 230)) other than the big cluster, or a performance cluster (e.g., a second cluster 220) based on the priority value being less than the reference value. For example, as the priority value changes and as the render process changes to the non-render process, the scheduler 263 may change the cluster processing the non-render process. For example, as the render process changes to the non-render process, the scheduler 263 may change the cluster processing the non-render process to an existing cluster. Herein, the existing cluster may be a cluster processing the non-render process before a process is identified as the render process according to a priority value. Hereinafter, a cluster (e.g., the little cluster (or the efficiency cluster) or the performance cluster) other than the big cluster may be referred to as the little cluster.

The scheduler 263 may change a fallback core of the render process (i.e., a process in which a priority value is greater than or equal to the reference value (e.g., 1)). For example, the scheduler 263 may change the fallback core (or a fallback cluster) of the render process to the big cluster. Herein, a fallback may refer to processing a process in an alternative cluster when the scheduler 263 lacks a resource of the cluster processing the process (or when processor usage is greater than or equal to reference usage). For example, the scheduler 263 may process another process (or another thread) other than the render process (i.e., a process in which a priority value is greater than or equal to the reference value (e.g., 1)) among processes processed in the big cluster in an alternative processor (e.g., the little cluster), when a resource of the big cluster is insufficient (or when big cluster usage is greater than or equal to reference usage).

An operation in which the electronic device 101 processes the render process based on an environment of a processor 120 may be illustrated.

For example, the scheduler 263 may schedule the render process so that the render process is processed before a general task (or a CFS task) enqueued in a run queue (RQ) of the big cluster. For example, the scheduler 263 may schedule the render process so that the render process is processed before the general task enqueued in the run queue, based on the number of general tasks enqueued in the run queue (RQ) of the big cluster being greater than or equal to the reference number. For example, the scheduler 263 may schedule the render process so that the render process is processed before the general task (or the CFS task) that has a shorter virtual run time than a virtual run time (vruntime) of the render process. Herein, the virtual run time may be an expected run time of each of CFS tasks. For example, the scheduler 263 may schedule the CFS tasks so that the CFS tasks other than the render process having a shorter virtual run time are processed first.

For example, the scheduler 263 may process the non-render process based on a virtual run time, based on the render process being changed to the non-render process.

The scheduler 263 may adjust (or increase) a lock order (or a wait order) of the render process. For example, when lock contention occurs between the rendering process and another process for the same resource (or data stored in the memory 130), processing of the render process may be delayed. The scheduler 263 may adjust (or increase) an order (or a wait order) of a mutual exclusion (MUTEX) lock of the render process for a resource in which the render process and the other process are in contention. Accordingly, the render process may quickly obtain a lock for the resource in the contention. Herein, a mutex refers to an object for excluding multiple processes from using one resource at the same time. A mutex lock for a resource of a process may be understood as the process owning the mutex for the resource. However, it is not limited thereto. The scheduler 263 may adjust (or increase) the lock order of the render process, even in case of lock situations (e.g., futex or semaphore) other than the mutex lock.

For example, the scheduler 263 may determine an order of a lock of the non-render process based on a request order, based on the render process being changed to the non-render process.

The scheduler 263 may increase an operating frequency of the big cluster based on the render process being identified. For example, the scheduler 263 may change the operating frequency of the big cluster to a maximum frequency based on the render process being identified. However, it is not limited thereto. The scheduler 263 may reduce the operating frequency of the big cluster based on the render process not being identified. For example, the scheduler 263 may reduce the operating frequency of the big cluster based on all render processes being changed to the non-render process. However, it is not limited thereto. Herein, identifying the render process may include allocating the render process to be processed in the big cluster.

A relation process of the process (or the render process) in which the priority value is greater than or equal to the reference value (e.g., 1) may be allocated to the big cluster. Herein, the relation process may be a process of waking-up the process (or the render process) in which the priority value is greater than or equal to the reference value (e.g., 1). For example, the relation process may be a process generating the remote procedure call (or inter process communication) (e.g., a binder call) to the render process.

For example, the scheduler 263 may manage a relation list of the relation process of the render process. For example, the scheduler 263 may manage the relation list of each of a plurality of render processes when the render process is plural. The relation list may be a list of processes of waking-up (or calling a remote procedure) the render process. The relation list may indicate a specified number (e.g., 5) of processes. For example, the scheduler 263 may remove the relation process from the relation list in an order of shortest load (or virtual run time) of relation processes, when the number of the relation processes related to one render process exceeds the specified number (e.g., 5). For example, the scheduler 263 may maintain the specified number of relation processes from the relation list in an order of longest load (or virtual run time) of the relation processes, when the number of the relation processes related to one render process exceeds the specified number.

For example, the scheduler 263 may change a scheduling policy of the relation process based on whether the render process is maintained. For example, the scheduler 263 may determine to change a cluster processing the relation process to the big cluster (e.g., the first cluster 210) while the priority value of the render process is greater than or equal to the reference value (e.g., 1).

For example, the scheduler 263 may change a fallback cluster of the relation process of the render process (or included in the relation list of the render process) to the big cluster. For example, the scheduler 263 may schedule the relation process so that the relation process of the render process (or included in the relation list of the render process) is processed before the general task enqueued in the run queue. For example, the scheduler 263 may adjust (or increase) a lock order of the relation process of the render process (or included in the relation list of the render process).

For example, the scheduler 263 may change the fallback cluster of the relation process to the little cluster based on the render process being changed to the non-render process. For example, the scheduler 263 may process the non-render process based on a virtual run time of the relation process, based on the render process being changed to the non-render process. For example, the scheduler 263 may determine the lock order of the relation process based on a request order, based on the render process being changed to the non-render process.

The scheduler 263 may apply the same scheduling policy as the render process to a process when the process communicates with a graphic library 253 (or when drawing an image through the graphic library 253). For example, applying the same scheduling policy as the render process may indicate that migration to the big cluster and the operation of processing the render process based on the environment of the processor 120 is applied. However, it is not limited thereto.

Referring to FIG. 3, the above-described example is not limited to an example of a process. Hereinafter, an operation of the electronic device 101 for specifying a thread for performing an actual rendering and processing the specified thread in the big cluster will be described.

The binder driver 261 may identify a request (e.g., a remote procedure call) of one of a thread among threads 311, 313, 315, 317, and 319 of the application process 310. For example, the request (e.g., the remote procedure call) may be a binder call for message transfer and/or data transfer from a thread to another process other than the application process 310. The remote procedure call may include the identification information (e.g., PID and TID) of the caller and the identification information (e.g., PID, and TID) of the callee. Hereinafter, a thread generating the request (e.g., the remote procedure call) may be referred to as a first thread.

For example, the binder driver 261 may transmit at least part of information included in the request of the first thread to the scheduler 263. For example, the binder driver 261 may transmit the identification information of the caller and/or the identification information of the callee included in the request to the scheduler 263.

The scheduler 263 may determine a cluster to process the first thread based on a request of the first thread. For example, the scheduler 263 may determine the cluster to process the first thread based on at least part of information (e.g., the identification information of the caller and/or the identification information of the callee) included in the remote procedure call from the binder driver 261.

The scheduler 263 may determine whether the application process 310 is a thread of the top-app based on at least part of information (e.g., the identification information of the caller). The scheduler 263 may determine that the application process 310 is the thread of the top-app based on the identification information included in the resource allocation information of the top-app corresponding to the identification information of the caller.

The scheduler 263 may determine that the first thread is the thread of the top-app, based on the resource allocation information of the top-app managed by the Cgroup 265, based on identification that a resource allocated to the first thread (or the application process 310 including the first thread) is included in a resource for the top-app (or the application having the top activity).

The scheduler 263 may determine a priority value (or a graphic count value) for determining a cluster to process the first thread based on a result of determining whether the first thread is the thread of the top-app.

The scheduler 263 may determine whether the callee of the request is the specified process (or the processor for outputting the image to the display (e.g., the display module 160 of FIG. 1)) (e.g., the surface flinger 251) based on at least part of information (e.g., the identification information of the callee).

The scheduler 263 may determine the priority value (or the graphic count value) for determining the cluster to process the application process 310 based on a result of determining whether the callee is the surface flinger 251.

The scheduler 263 may determine whether the first thread (or a caller thread) is a main thread 311 based on at least part of the information (e.g., the identification information of the caller). The scheduler 263 may determine whether TID of the first thread corresponds to TID of the main thread 311 based on TID of each of the threads 311, 313, 315, 317, and 319 of the application process 310 managed by the Cgroup 265. The scheduler 263 may determine that the first thread is the main thread 311 based on the TID of the first thread corresponding to the TID of the main thread 311. The scheduler 263 may determine that the first thread is not the main thread 311 based on the TID of the first thread not corresponding to the TID of the main thread 311 (or different from the TID of the main thread 311).

The scheduler 263 may determine the priority value (or the graphic count value) for determining the cluster to process the first thread based on a result of determining whether the first thread is the main thread 311.

For example, the scheduler 263 may increase the priority value of the first thread by a specified value (e.g., 2) when the first thread is the thread of the top-app. For example, the scheduler 263 may reduce the priority value of the first thread by another specified value (e.g., 1) when the first thread is not the thread of the top-app.

For example, the scheduler 263 may increase the priority value of the first thread by the specified value (e.g., 2) when the callee is the surface flinger 251. For example, the scheduler 263 may reduce the priority value of the first thread by the other specified value (e.g., 1) when the callee is not the surface flinger 251.

For example, the scheduler 263 may increase the priority value of the first thread by the specified value (e.g., 2) when the first thread is not the main thread 311. For example, the scheduler 263 may reduce the priority value of the first thread by the other specified value (e.g., 1) when the first thread is the main thread 311.

For example, the scheduler 263 may increase the priority value of the first thread by the specified value (e.g., 2) when all of a plurality of conditions is satisfied. For example, the scheduler 263 may reduce the priority value of the first thread by the other specified value (e.g., 1) when at least one of the plurality of conditions is not satisfied. Herein, the plurality of conditions may include a first condition that the first thread is the thread of the top-app, a second condition that the callee is the surface flinger 251, and a third condition that the first thread is not the main thread 311.

The scheduler 263 may determine a cluster of the hardware layer 300 to process a thread, based on a priority value of the thread.

For example, the scheduler 263 may determine to change a cluster processing a thread to the big cluster (e.g., the first cluster 210) based on a priority value of the thread being greater than or equal to the reference value (e.g., 1). For example, the operation of changing the cluster processing the thread to the big cluster may be referred to as migration (or big cluster migration). Hereinafter, a thread in which a priority value is greater than or equal to the reference value (e.g., 1) may be referred to as a render thread. A thread in which a priority value is less than the reference value (e.g., 1) may be referred to as a non-render thread. However, it is not limited thereto.

For example, the scheduler 263 may determine to maintain a cluster processing the non-render thread based on the priority value being less than the reference value. However, it is not limited thereto. For example, the scheduler 263 may change the cluster processing the non-render thread to the little cluster (e.g., the third cluster 230 or the second cluster 220) other than the big cluster based on the priority value being less than the reference value. For example, the scheduler 263 may change the cluster processing the non-render thread as the render thread changes to the non-render thread according to change of the priority value. For example, the scheduler 263 may change the cluster processing the non-render thread to an existing cluster as the render thread is changed to the non-render thread. Herein, the existing cluster may be a cluster processing the non-render thread before the thread is identified as the render thread according to the priority value.

The scheduler 263 may change a fallback core of the render thread (i.e., the thread in which the priority value is greater than or equal to the reference value (e.g., 1)). For example, the scheduler 263 may change the fallback core (or a fallback cluster) of the render thread to the big cluster. For example, the scheduler 263 may process another thread (or a different thread) other than the render thread (i.e., the thread in which the priority value is greater than or equal to the reference value (e.g., 1)) among threads processed in the big cluster in the alternative processor (e.g., the little cluster) when a resource of the big cluster is insufficient (or when the big cluster usage is greater than or equal to the reference usage).

The operation in which the electronic device 101 processes the render thread based on the environment of the processor 120 may be illustrated.

For example, the scheduler 263 may schedule the render thread so that the render thread is processed before the CFS task enqueued in the run queue (RQ) of the big cluster. For example, the scheduler 263 may schedule the render thread so that the render thread is processed before the CFS task enqueued in the run queue, based on general tasks being enqueued in the run queue (RQ) of the big cluster to be greater than or equal to the reference number. For example, the scheduler 263 may process the non-render thread based on virtual run time, based on the render thread being changed to the non-render thread.

The scheduler 263 may adjust (or increase) a lock order (or a wait order) of the render thread. The scheduler 263 may adjust (or increase) an order (or a wait order) of a mutex lock of the render thread for a resource in which the render thread and another thread are in contention. Accordingly, the render thread may quickly obtain the lock for the resource in the contention. However, it is not limited thereto. The scheduler 263 may adjust (or increase) the order of the lock of the render thread, even in a case of lock situations (e.g., futex or semaphore) other than the mutex lock. For example, the scheduler 263 may determine an order of a lock of the non-render thread based on an order of a request, based on the render thread being changed to the non-render thread.

The scheduler 263 may increase the operating frequency of the big cluster based on the render thread being identified. For example, the scheduler 263 may change the operating frequency of the big cluster to the maximum frequency based on the render thread being identified. However, it is not limited thereto. The scheduler 263 may reduce the operating frequency of the big cluster based on the render thread not being identified. For example, the scheduler 263 may reduce the operating frequency of the big cluster based on all render threads being changed to the non-render thread. However, it is not limited thereto. Herein, identifying the render thread may include allocating the render thread to be processed in the big cluster.

The relation thread of the thread (or the render thread) in which the priority value is greater than or equal to the reference value (e.g., 1) may be allocated to the big cluster. Herein, the relation thread may be a thread of waking-up the thread (or the render thread) in which the priority value is greater than or equal to the reference value (e.g., 1). For example, the relation thread may be a thread generating the remote procedure call (or inter thread communication) (e.g., the binder call) to the render thread.

For example, the scheduler 263 may manage a relation list of the relation thread of the render thread. For example, the scheduler 263 may manage the relation list of each of a plurality of render threads when the render thread is plural. For example, the scheduler 263 may remove the relation thread from the relation list in an order of shortest load (or virtual run time) of relation threads, when the number of the relation threads related to one render thread exceeds a specified number (e.g., 5). For example, the scheduler 263 may maintain the relation thread from the relation list in an order of longest load (or virtual run time) of the relation threads, when the number of the relation threads related to one render thread exceeds the specified number (e.g., 5).

For example, the scheduler 263 may change a scheduling policy of the relation thread based on whether the render thread is maintained. For example, the scheduler 263 may determine to change a cluster processing the relation thread to the big cluster (e.g., the first cluster 210) while the priority value of the render thread is greater than or equal to the reference value (e.g., 1).

For example, the scheduler 263 may change a fallback cluster of the relation thread of the render thread (or included in the relation list of the render thread) to the big cluster. For example, the scheduler 263 may schedule the relation thread so that the relation thread of the render thread (or included in the relation list of the render thread) is processed before the general task enqueued in the run queue. For example, the scheduler 263 may adjust (or increase) a lock order of the relation thread of the render thread (or included in the relation list of the render thread).

For example, the scheduler 263 may change the fallback cluster of the relation thread to the little cluster based on the render thread being changed to the non-render thread. For example, the scheduler 263 may process the non-render thread based on a virtual run time of the relation thread, based on the render thread being changed to the non-render thread. For example, the scheduler 263 may determine the lock order of the relation thread based on a request order, based on the render thread being changed to the non-render thread.

The scheduler 263 may apply the same scheduling policy as the render thread to a thread when the thread communicates with the graphic library 253 (or when drawing an image through the graphic library 253). For example, applying the same scheduling policy as the render thread may indicate that migration to the big cluster and the operation of processing the render thread based on the environment of the processor 120 is applied. However, it is not limited thereto.

As described above, the electronic device 101 may identify a render process and a relation process of the render process (or a render thread and a relation thread of the render thread) based on a remote procedure call. For example, the electronic device 101 may identify a process (or a thread) that actually draws an image, even when the process (or the thread) does not use the graphic library 253 (or a basic graphic library provided by the operating system 142).

As described above, the electronic device 101 may ensure that processing of the render process and the identified relation process is not delayed by ensuring migration of the identified render process and the identified relation process (or the identified render thread and the identified relation thread) to the big cluster and/or scheduling the identified render process and the identified relation process (or the identified render thread and the identified relation thread) to be processed in the big cluster. Accordingly, the electronic device 101 may reduce occurrence of the frame drop (of the top-app) by ensuring migration of the identified render process and the identified relation process (or the identified render thread and the identified relation thread) to the big cluster and/or scheduling the identified render process and the identified relation process (or the identified render thread and the identified relation thread) to be processed in the big cluster.

As described above, the electronic device 101 may reduce (or prevent) excessive current consumption (or excessive energy consumption of a battery) by running (not migrating to the big cluster) a non-render process (or a non-render thread) in a cluster (e.g., the second cluster 220 or the third cluster 230) other than the big cluster.

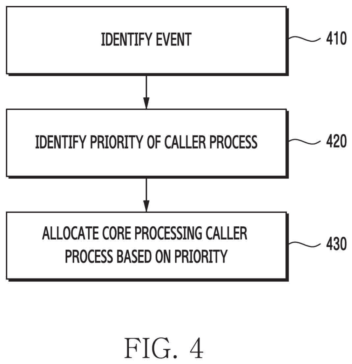

FIG. 4 is a flowchart illustrating an operation of an electronic device.

FIG. 4 may be described referring to FIG. 1 to FIG. 3. Operations of FIG. 4 may be performed by the electronic device 101 (or the processor 120) of FIG. 1 or FIG. 2.

Referring to FIG. 4, in an operation 410, the electronic device 101 may identify an event. For example, the event may be a remote procedure call (or inter process communication (IPC)) (e.g., a binder call).

In an operation 420, the electronic device 101 may identify a priority of a caller process. The electronic device 101 may identify the priority of the caller process based on the event. The electronic device 101 may identify the priority of the caller process using a priority value of the caller process identified based on the event. Herein, the caller process may be a process generating the event (or the remote procedure call).

For example, the electronic device 101 may increase the priority value of the caller process by a specified value (e.g., 2) when the caller process is a process of a top-app. For example, the electronic device 101 may reduce the priority value of the caller process by another specified value (e.g., 1) when the caller process that generated the request is not the process of the top-app.

For example, the electronic device 101 may increase the priority value of the caller process by the specified value (e.g., 2) when a callee process is a surface flinger 251. For example, the electronic device 101 may reduce the priority value of the caller process by the other specified value (e.g., 1) when the callee process is not the surface flinger 251.

For example, the electronic device 101 may increase the priority value of the caller process by the specified value (e.g., 2) when all of a plurality of conditions is satisfied. For example, the electronic device 101 may reduce the priority value of the caller process by the other specified value (e.g., 1) when at least one of the plurality of conditions is not satisfied. Herein, the plurality of conditions may include a first condition that the caller process that generated the request is the process of the top-app, and a second condition that the callee process is the surface flinger 251.

For example, the electronic device 101 may determine that the priority of the caller process is high based on the priority value of the caller process being greater than or equal to a reference value (e.g., 1). For example, the electronic device 101 may determine that the priority of the caller process is low based on the priority value of the caller process being less than the reference value (e.g., 1).

In an operation 430, the electronic device 101 may allocate a core processing the caller process based on the priority. The electronic device 101 may determine a cluster to process a process as a big cluster when a priority of the process is high. The electronic device 101 may determine the cluster to process the process as a little cluster when the priority of the process is low.

The operations of FIG. 4 are described based on a process, but are not limited thereto. For example, the operations of FIG. 4 may be performed based on a thread. For example, in the operation 420, the electronic device 101 may identify a priority of a caller thread. In this case, the electronic device 101 may consider a condition that the caller thread is not a main thread 311 in order to identify the priority of the caller thread. For example, in the operation 430, the electronic device 101 may allocate a core processing the caller thread based on the priority.

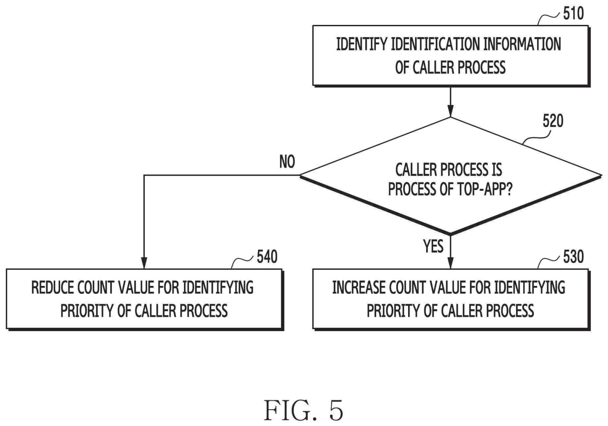

FIG. 5 is a flowchart illustrating an operation of an electronic device.

FIG. 5 may be described referring to FIG. 1 to FIG. 4. Operations of FIG. 5 may be performed by the electronic device 101 (or the processor 120) of FIG. 1 or FIG. 2. The operations of FIG. 5 may be included in the operation 420 of FIG. 4.

Referring to FIG. 5, in an operation 510, the electronic device 101 may identify identification information of a caller process. For example, the identification information may include PID and/or resource information allocated to the caller process.

In an operation 520, the electronic device 101 may determine whether the caller process is a process of a top-app. The electronic device 101 may determine that an application process 310 is the process of the top-app based on PID of the top-app corresponding to PID of the caller process. The electronic device 101 may determine that the application process 310 is the process of the top-app based on identification that a resource allocated to the application process 310 is included in a resource for the top-app (or an application having a top activity).

Based on determination that the caller process is the process of the top-app, the electronic device 101 may perform an operation 530. Based on determination that the caller process is not the process of the top-app, the electronic device 101 may perform an operation 540.

In an operation 530, the electronic device 101 may increase a count value for identifying a priority of the caller process. For example, the electronic device 101 may increase the count value of the caller process by a specified value (e.g., 2).

In the operation 540, the electronic device 101 may reduce the count value for identifying the priority of the caller process. For example, the electronic device 101 may reduce the count value of the caller process by another specified value (e.g., 1).

The operations of FIG. 5 are described based on a process, but are not limited thereto. For example, the operations of FIG. 5 may be performed based on a thread. For example, in the operation 510, the electronic device 101 may identify identification information (e.g., PID, TID, and/or resource information) of a caller thread. For example, in the operation 520, the electronic device 101 may determine whether the caller thread is a thread of the top-app. When the caller thread is the thread of the top-app in the operation 520, in the operation 530, the electronic device 101 may increase a count value for identifying a priority of the caller thread. When the caller thread is not the thread of the top-app in the operation 520, in the operation 540, the electronic device 101 may reduce the count value for identifying the priority of the caller thread.

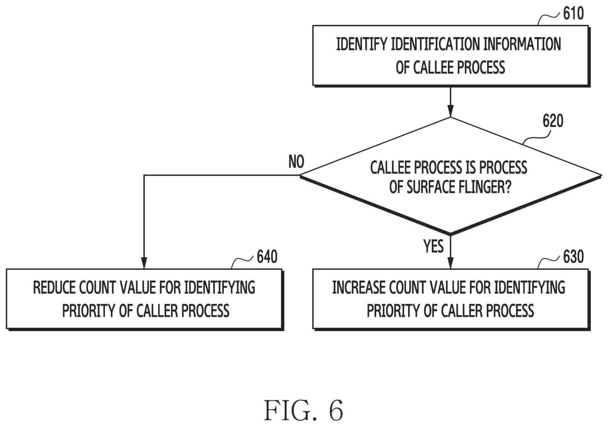

FIG. 6 is a flowchart illustrating an operation of an electronic device.

FIG. 6 may be described referring to FIG. 1 to FIG. 5. Operations of FIG. 6 may be performed by the electronic device 101 (or the processor 120) of FIG. 1 or FIG. 2. The operations of FIG. 6 may be included in the operation 420 of FIG. 4.

Referring to FIG. 6, in an operation 610, the electronic device 101 may identify identification information of a callee process. For example, the identification information may include PID and/or resource information allocated to the callee process.

In an operation 620, the electronic device 101 may determine whether the callee process is a process of a surface flinger. The electronic device 101 may determine that the callee process is the process of the surface flinger based on PID of the surface flinger corresponding to PID of the callee process. The electronic device 101 may determine that the callee process is the process of the surface flinger based on correspondence between identification information included in resource allocation information of the surface flinger and identification information of the callee process.

Based on determination that the callee process is the process of the surface flinger, the electronic device 101 may perform an operation 630. Based on determination that the callee process is not the process of the surface flinger, the electronic device 101 may perform an operation 640.

In the operation 630, the electronic device 101 may increase a count value for identifying a priority of a caller process. For example, a scheduler 263 may increase a priority value of an application process 310 by a specified value (e.g., 2) when a callee is a surface flinger 251.

In the operation 640, the electronic device 101 may reduce the count value for identifying the priority of the caller process. For example, the scheduler 263 may reduce the priority value of the application process 310 by another specified value (e.g., 1) when the callee is not the surface flinger 251.

The operations of FIG. 6 are described based on a process, but are not limited thereto. For example, the operations of FIG. 6 may be performed based on a thread. For example, in the operation 610, the electronic device 101 may identify identification information (e.g., PID, TID, and/or resource information) of a callee thread. For example, in the operation 620, the electronic device 101 may determine whether the callee thread is a thread of the surface flinger 251. For example, in the operation 630, the electronic device 101 may increase a count value for identifying a priority of a caller thread. In the operation 640, the electronic device 101 may reduce the count value for identifying the priority of the caller thread.

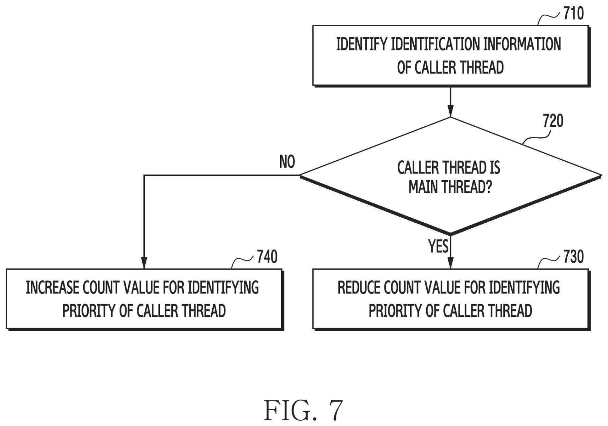

FIG. 7 is a flowchart illustrating an operation of an electronic device.

FIG. 7 may be described referring to FIG. 1 to FIG. 6. Operations of FIG. 7 may be performed by the electronic device 101 (or the processor 120) of FIG. 1 or FIG. 2. The operations of FIG. 7 may be included in the operation 420 of FIG. 4.

Referring to FIG. 7, in an operation 710, the electronic device 101 may identify identification information of a caller thread. For example, the identification information may include PID, TID, and/or resource information allocated to the caller thread.

In an operation 720, the electronic device 101 may determine whether the caller thread is a main thread. The electronic device 101 may determine that the caller thread is the main thread based on TID of the main thread corresponding to TID of the caller thread. The electronic device 101 may determine that the caller thread is the main thread based on identification that a resource allocated to the caller thread is included in a resource for a process of the main thread.

Based on determination that the caller thread is the main thread, the electronic device 101 may perform an operation 730. Based on determination that the caller thread is not the main thread, the electronic device 101 may perform an operation 740.

In the operation 730, the electronic device 101 may reduce a count value for identifying a priority of the caller thread. For example, a scheduler 263 may reduce a priority value of a first thread by another specified value (e.g., 1) when the first thread is a main thread 311.

In the operation 740, the electronic device 101 may increase the count value for identifying the priority of the caller thread. For example, the scheduler 263 may increase the priority value of the first thread by a specified value (e.g., 2) when the first thread is not the main thread 311.

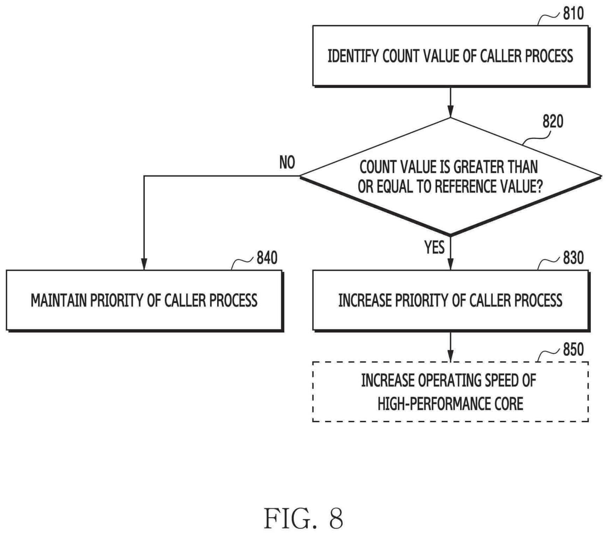

FIG. 8 is a flowchart illustrating an operation of an electronic device.

FIG. 8 may be described with reference to FIG. 1 to FIG. 5. Operations of FIG. 8 may be performed by the electronic device 101 (or the processor 120) of FIG. 1 or FIG. 2. The operations of FIG. 8 may be included in the operation 430 of FIG. 4.

Referring to FIG. 8, in an operation 810, the electronic device 101 may identify a count value of a caller process. In an operation 820, the electronic device 101 may determine whether the count value is greater than or equal to a reference value (e.g., 1).

Based on determination that the count value is greater than or equal to the reference value, the electronic device 101 may perform an operation 830. Based on determination that the count value is less than the reference value, the electronic device 101 may perform an operation 840.

In the operation 830, the electronic device 101 may increase priority of the caller process.

For example, the electronic device 101 may allocate the caller process to a high-performance core (e.g., a core of a big cluster) based on increasing the priority of the caller process. For example, the electronic device 101 may change a core processing the caller process to the big cluster (e.g., a first cluster 210).

For example, the electronic device 101 may change a fallback core of the caller process based on increasing the priority of the caller process. For example, the electronic device 101 may change the fallback core (or a fallback cluster) of the caller process to the big cluster based on increasing the priority of the caller process.

For example, the electronic device 101 may schedule the caller process so that the caller process is processed before a general task (or a CFS task) enqueued in a run queue (RQ) of the big cluster based on increasing the priority of the caller process.

For example, the electronic device 101 may schedule the caller process so that the caller process is processed before general tasks (or the CFS task) having a shorter virtual run time than virtual run time (vruntime) of the caller process, based on increasing the priority of the caller process.

For example, the electronic device 101 may adjust (or increase) an order (or a wait order) of a mutual exclusion (MUTEX) lock of the caller process for a resource in which the caller process and another process are in contention based on increasing the priority of the caller process.

In the operation 840, the electronic device 101 may maintain the priority of the caller process.

For example, the electronic device 101 may maintain the core for processing the caller process based on maintaining the priority of the caller process. However, it is not limited thereto. The electronic device 101 may change the core for processing the caller process to a core of a little cluster (e.g., a third cluster 230 or a second cluster 220) other than the big cluster.

In an operation 850, the electronic device 101 may increase an operating speed of the high-performance core. For example, the electronic device 101 may change the operating speed of the high-performance core to a maximum speed. Alternatively, the operation 850 may not be performed.

The operations of FIG. 8 are described based on a process, but are not limited thereto. For example, the operations of FIG. 8 may be performed based on a thread. For example, in the operation 810, the electronic device 101 may identify a count value of a caller thread. For example, in the operation 830, the electronic device 101 may allocate the caller thread to the high-performance core (e.g., the core of the big cluster). In the operation 840, the electronic device 101 may maintain a core for processing the caller thread.

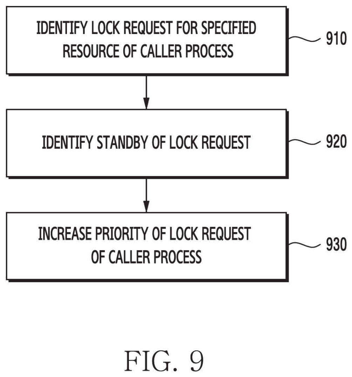

FIG. 9 is a flowchart illustrating an operation of an electronic device.

FIG. 9 may be described referring to FIG. 1 to FIG. 5. Operations of FIG. 9 may be performed by the electronic device 101 (or the processor 120) of FIG. 1 or FIG. 2. The operations of FIG. 9 may be performed when the operation 830 is performed. For example, the operations of FIG. 9 may be operations performed with respect to the caller process of the operation 830.

Referring to FIG. 9, in an operation 910, the electronic device 101 may identify a lock request for a specified resource of a caller process. For example, the requested lock may be a mutex (mutual exclusion, MUTEX) lock for an arbitrary resource (or data).

In an operation 920, the electronic device 101 may identify a standby of the lock request. For example, based on presence of at least one request for the mutex lock for the arbitrary resource (or data) before the lock request of the caller process, the electronic device 101 may identify that the standby of the lock request is required.

In an operation 930, the electronic device 101 may increase a priority of the lock request of the caller process. The electronic device 101 may increase the priority of the lock request of the caller process with respect to a resource in which the caller process, which is a render process, and a non-render process are in contention.

The operations of FIG. 9 are described based on a process, but are not limited thereto. For example, the operations of FIG. 9 may be performed based on a thread. For example, in the operation 910, the electronic device 101 may identify a lock request for a specified resource of a caller thread. For example, in the operation 930, the electronic device 101 may increase a priority of the lock request of the caller thread.

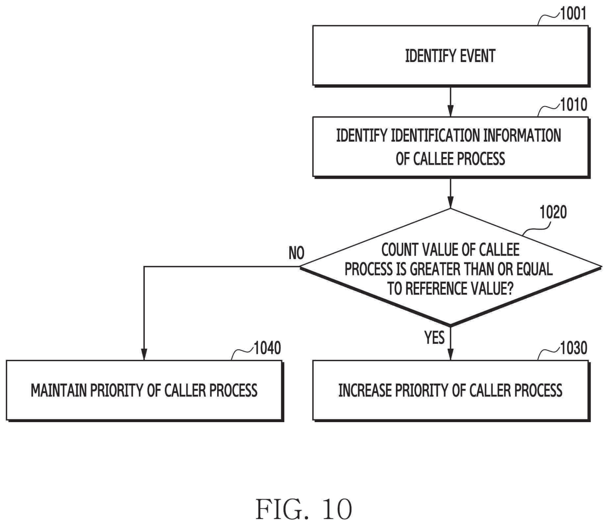

FIG. 10 is a flowchart illustrating an operation of an electronic device.

FIG. 10 may be described referring to FIG. 1 to FIG. 5. Operations of FIG. 10 may be performed by the electronic device 101 (or the processor 120) of FIG. 1 or FIG. 2. The operations of FIG. 10 may be included in the operations 420 and 430 of FIG. 4.

Referring to FIG. 10, in an operation 1001, the electronic device 101 may identify an event. For example, the event may be a remote procedure call (or inter process communication (IPC)) (e.g., a binder call).

In an operation 1010, the electronic device 101 may identify identification information of a callee process.

In an operation 1020, the electronic device 101 may determine whether a count value of the callee process is greater than or equal to a reference value (e.g., 1). For example, the electronic device 101 may determine whether the count value of the callee process is greater than or equal to the reference value (e.g., 1) in order to determine whether the callee process is a process (or render process) having a high priority.

Based on determination that the count value of the callee process is greater than or equal to the reference value, the electronic device 101 may perform an operation 1030. Based on determination that the count value of the callee process is less than the reference value, the electronic device 101 may perform an operation 1040.

In the operation 1030, the electronic device 101 may increase the priority of a caller process.

For example, the electronic device 101 may allocate the caller process to a high-performance core based on increasing the priority of the caller process.

For example, the electronic device 101 may change a fallback core (or a fallback cluster) of the caller process to a big cluster based on increasing the priority of the caller process. For example, the electronic device 101 may schedule the caller process so that the caller process is processed before a general task (or a CFS task) enqueued in a run queue (RQ) of the big cluster based on increasing the priority of the caller process. For example, the electronic device 101 may schedule the caller process so that the caller process is processed before general tasks (or the CFS task) having a shorter virtual run time than virtual run time (vruntime) of the caller process, based on increasing the priority of the caller process. For example, the electronic device 101 may adjust (or increase) an order (or a wait order) of a mutex (mutual exclusion, MUTEX) lock of the caller process for a resource in which the caller process and another process are in contention based on increasing the priority of the caller process.

The electronic device 101 may allocate the caller process included in a relation list of the callee process to a high-performance core when the count value of the callee process is greater than or equal to the reference value. Herein, the number of caller processes included in the relation list may be less than or equal to a specified number (e.g., 5). For example, the relation list may include the specified number (e.g., 5) of caller processes in an order of shortest load (or virtual run time).

In the operation 1040, the electronic device 101 may maintain the priority of the caller process.

For example, the electronic device 101 may maintain a core for processing the caller process based on maintaining the priority of the caller process. However, it is not limited thereto. The electronic device 101 may change the core for processing the caller process to a core of a little cluster (e.g., a third cluster 230 or a second cluster 220) other than the big cluster.

The operations of FIG. 10 are described based on a process, but are not limited thereto. For example, the operations of FIG. 10 may be performed based on a thread. For example, in the operation 1010, the electronic device 101 may identify a count value of a callee thread. For example, in the operation 1030, the electronic device 101 may allocate a caller thread to the high-performance core (e.g., a core of the big cluster). In the operation 1040, the electronic device 101 may maintain a core for processing the caller thread.

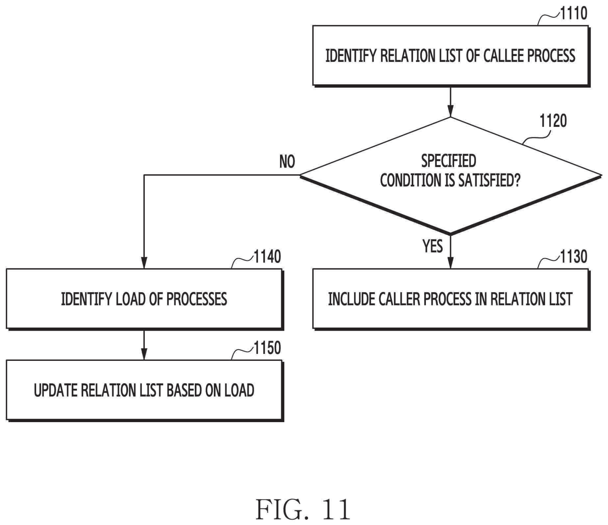

FIG. 11 is a flowchart illustrating an operation of an electronic device.

FIG. 11 may be described referring to FIG. 1 to FIG. 5. Operations of FIG. 11 may be performed by the electronic device 101 (or the processor 120) of FIG. 1 or FIG. 2. The operations of FIG. 11 may be included in the operation 1030 of FIG. 10.

Referring to FIG. 11, in an operation 1110, the electronic device 101 may identify a relation list of a callee process. The electronic device 101 may identify the relation list of the callee process, which is a render process (i.e., a process in which a priority value is greater than or equal to a reference value (e.g., 1)). Herein, the relation list may be a list for managing processes for increasing a priority of a caller process calling the callee process. The electronic device 101 may manage the relation list for the render process.

In an operation 1120, the electronic device 101 may determine whether a specified condition is satisfied. For example, the specified condition may be a condition for including the caller process in the relation list. For example, the specified condition may be a condition for the electronic device 101 to include the caller process in the relation list based on the number of processes included in the relation list being less than a specified number (e.g., 5).

For example, the electronic device 101 may determine that the specified condition is satisfied based on the number of the processes included in the relation list being less than the specified number (e.g., 5). For example, the electronic device 101 may determine that the specified condition is not satisfied based on the number of the processes included in the relation list being the specified number (e.g., 5).

The electronic device 101 may perform an operation 1130 based on determination that the specified condition is satisfied. The electronic device 101 may perform an operation 1140 based on determination that the specified condition is not satisfied.

In the operation 1130, the electronic device 101 may include the caller process in the relation list.

For example, the electronic device 101 may increase priority of the processes included in the relation list. For example, the electronic device 101 may increase the priority of the caller process included in the relation list based on including the caller process in the relation list.

In an operation 1140, the electronic device 101 may identify a load (or virtual run time) of processes. For example, the electronic device 101 may identify a load (or virtual run time) of the processes included in the relation list. For example, the electronic device 101 may identify a load (or virtual run time) of the processes included in the relation list and of the caller process.

In an operation 1150, the electronic device 101 may update the relation list based on a load (or virtual run time). For example, the electronic device 101 may update the relation list so that the relation list includes the specified number (e.g., 5) of processes in an order of highest load (or in an order of longest virtual run time). For example, the electronic device 101 may update the relation list so that the relation list includes the specified number (e.g., 5) of the processes in an order of highest load between the load of the processes included in the relation list before update and the load of the caller process.

For example, the electronic device 101 may increase the priority of the processes included in the relation list. For example, the electronic device 101 may increase the priority of the caller process included in the relation list based on including the caller process in the relation list.

The operations of FIG. 11 are described based on a process, but are not limited thereto. For example, the operations of FIG. 11 may be performed based on a thread. In the operation 1110, the electronic device 101 may identify a relation list of a callee thread. In the operation 1130, the electronic device 101 may include a caller thread in the relation list. In the operation 1140, the electronic device 101 may identify a load (or virtual run time) of threads.

As described above, an electronic device 101 may comprise a display 160, a processor 120 including a first core 221 running in a first frequency range, and a second core 231 running in a second frequency range having a second maximum frequency less than a first maximum frequency of the first frequency range, and memory 130, comprising one or more storage mediums, storing instructions. The instructions that, when executed by the at least one processor 120 individually or collectively, may cause the electronic device 101 to identify a request of a first process among at least one process of an application 241. The instructions that, when executed by the at least one processor 120 individually or collectively, may cause the electronic device 101 to, based on that a process indicated by the request is related to a second process for outputting an image to the display 160, change a core for processing the first process to the first core 221 among the first core 221 and the second core 231. The instructions that, when executed by the at least one processor 120 individually or collectively, may cause the electronic device 101 to, based on that the process is related to a third process different from the second process, maintain the core for processing the first process.

The instructions that, when executed by the at least one processor 120 individually or collectively, may cause the electronic device 101 to identify resources allocated to the first process. The instructions that, when executed by the at least one processor 120 individually or collectively, may cause the electronic device 101 to, based on identifying that the identified resources are included in resources for the application 241 of a top activity, change the core for processing the first process to the first core 221. The instructions that, when executed by the at least one processor 120 individually or collectively, may cause the electronic device 101 to, based on identifying that the identified resources are included in resources other than the resources for the application 241 of the top activity, maintain the core for processing the first process.

The instructions that, when executed by the at least one processor 120 individually or collectively, may cause the electronic device 101 to identify a thread of the first process that generates the request. The instructions that, when executed by the at least one processor 120 individually or collectively, may cause the electronic device 101 to, based on identifying that the thread is a thread other than a main thread of the first process, change the core for processing the thread of the first process to the first core 221. The instructions that, when executed by the at least one processor 120 individually or collectively, may cause the electronic device 101 to, based on identifying that the thread is the main thread of the first process, maintain the core for processing the thread of the first process.

The request may be a request for communication between the first process and the process. The instructions that, when executed by the at least one processor 120 individually or collectively, may cause the electronic device 101 to transmit, through a binder driver 261, at least part of information included in the request to a scheduler 263. The instructions that, when executed by the at least one processor 120 individually or collectively, may cause the electronic device 101 to determine, through the scheduler 263, based on the at least part of the information, whether the identified process is related to the second process.

The request may be a binder call. The binder call may be an application programming interface (API) provided by the binder for sharing data between the first process and the process, to which independent memory 130 areas of the memory 130 are respectively allocated.

The instructions that, when executed by the at least one processor 120 individually or collectively, may cause the electronic device 101 to, based on that the process is related to the second process, identify one or more processes that call the first process. The instructions that, when executed by the at least one processor 120 individually or collectively, may cause the electronic device 101 to change a core for processing the one or more processes to the first core 221.

The instructions that, when executed by the at least one processor 120 individually or collectively, may cause the electronic device 101 to, based on that the process is related to the second process, allocate the first core 221 as a fallback core of the first process.

The instructions that, when executed by the at least one processor 120 individually or collectively, may cause the electronic device 101 to, based on that the process is related to the second process, prioritize the first process over a plurality of processes waiting in a queue related to the first core 221.

The instructions that, when executed by the at least one processor 120 individually or collectively, may cause the electronic device 101 to, based on changing the core for processing the first process to the first core 221, increase operating frequency of the first core 221 within the first frequency range.

The instructions that, when executed by the at least one processor 120 individually or collectively, may cause the electronic device 101 to, based on that the process is related to the second process, increase priority of a mutual exclusion lock of the first process for a specified resource.

The second process may be a process of a surface flinger for compositing at least one image stored in a frame buffer.

As described above, a method may be executed in an electronic device 101 comprising a display 160, and a processor 120 including a first core 221 running in a first frequency range, and a second core 231 running in a second frequency range having a second maximum frequency less than a first maximum frequency of the first frequency range. The method may comprise identifying a request of a first process among at least one process of an application 241. The method may comprise, based on that a process indicated by the request is related to a second process for outputting an image to the display 160, changing a core for processing the first process to the first core 221 among the first core 221 and the second core 231. The method may comprise, based on that the process is related to a third process different from the second process, maintaining the core for processing the first process.

The method may comprise identifying resources allocated to the first process. The method may comprise, based on identifying that the identified resources are included in resources for the application 241 of a top activity, changing the core for processing the first process to the first core 221. The method may comprise, based on identifying that the identified resources are included in resources other than the resources for the application 241 of the top activity, maintaining the core for processing the first process.

The method may comprise identifying a thread of the first process that generates the request. The method may comprise, based on identifying that the thread is a thread other than a main thread of the first process, changing the core for processing the thread of the first process to the first core 221. The method may comprise, based on identifying that the thread is the main thread of the first process, maintaining the core for processing the thread of the first process.

The request may be a request for communication between the first process and the process. The method may comprise transmitting, through a binder driver 261, at least part of information included in the request to a scheduler 263. The method may comprise determining, through the scheduler 263, based on the at least part of the information, whether the identified process is related to the second process.

The request may be a binder call. The binder call may be an application programming interface (API) provided by the binder for sharing data between the first process and the process, to which independent memory 130 areas of the memory 130 are respectively allocated.

The method may comprise, based on that the process is related to the second process, identifying one or more processes that call the first process. The method may comprise changing a core for processing the one or more processes to the first core 221.

The method may comprise, based on that the process is related to the second process, allocating the first core 221 as a fallback core of the first process.

The second process may be a process of a surface flinger for compositing at least one image stored in a frame buffer.

As described above, a non-transitory computer readable storage medium may store one or more programs including instructions. The instructions may be configured, when executed by a processor 120 of an electronic device 101 comprising a display 160, and the processor 120 including a first core 221 running in a first frequency range, and a second core 231 running in a second frequency range having a second maximum frequency less than a first maximum frequency of the first frequency range individually or collectively, to cause the electronic device 101 to identify a request of a first process among at least one process of an application 241. The instructions that, when executed by the at least one processor 120 individually or collectively, may cause the electronic device 101 to, based on that a process indicated by the request is related to a second process for outputting an image to the display 160, change a core for processing the first process to the first core 221 among the first core 221 and the second core 231. The instructions that, when executed by the at least one processor 120 individually or collectively, may cause the electronic device 101 to, based on that the process is related to a third process different from the second process, maintain the core for processing the first process.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a display (160),
a processor (120) including a first core (221) running in a first frequency range, and a second core (231) running in a second frequency range having a maximum frequency less than a maximum frequency of the first frequency range, and
memory (130) storing instructions, which when executed, cause the electronic device to:
identify a request of a first process (310) of an application (241),
based on a process indicated by the request being related to a process for outputting an image to the display (160), allocate the first process to the first core for processing, and
based on the process indicated by the request being related to a process other than a process for outputting an image to the display, maintain a core currently allocated to the first process as the core for processing the first process.

2. The electronic device of claim 1,
wherein the instructions cause the electronic device to:
identify resources allocated to the first process (310),
based on the identified resources being included in resources for the application (241) having the top activity among a plurality of applications, allocate the first process to the first core for processing, and
based on the identified resources being included in resources other than the resources for the application (241) having the top activity, maintain the core currently allocated to the first process as the core for processing the first process.

3. The electronic device of claim 1 or 2,
wherein the instructions cause the electronic device to:
identify a thread of the first process (310) that generates the request,
based on identifying that the thread is a thread other than a main thread of the first process, allocate the thread of the first process to the first core for processing, and
based on identifying that the thread is the main thread of the first process, maintain the core currently allocated to the thread of the first process as the core for processing the thread of the first process.

4. The electronic device of claim 1, 2 or 3,
wherein the request is a request for communication between the first process and the process indicated by the request, and
wherein the instructions cause the electronic device to:
transmit, through a binder driver (261), at least part of information included in the request to a scheduler (263), and
determine, through the scheduler (263), based on the at least part of the information, whether the indicated process is related to the process for outputting an image to the display.

5. The electronic device of claim 4,
wherein the request is a binder call, and
wherein the binder call is an application programming interface, API, provided by the binder for sharing data between the first process and the process indicated by the request, to which independent memory (130) areas of the memory (130) are respectively allocated.

6. The electronic device of any one of the preceding claims,
wherein the instructions cause the electronic device to:
based on the process indicated by the request being related to the process for outputting an image to the display, identify one or more processes that call the first process, and
allocate the one or more processes to the first core (221).

7. The electronic device of any one of the preceding claims,
wherein the instructions cause the electronic device to:
based on the process indicated by the request being related to the process for outputting an image to the display, allocate the first core (221) as a fallback core of the first process.

8. The electronic device of any one of the preceding claims,
wherein the instructions cause the electronic device to:
based on the process indicated by the request being related to the process for outputting an image to the display, prioritize the first process over a plurality of processes waiting in a queue related to the first core (221).

9. The electronic device of any one of the preceding claims,
wherein the instructions cause the electronic device to:
based on changing the core for processing the first process to the first core (221), increase an operating frequency of the first core (221) within the first frequency range.

10. The electronic device of any one of the preceding claims,
wherein the instructions cause the electronic device to:
based on the process indicated by the request being related to the process for outputting an image to the display, increase a priority of a mutual exclusion lock of the first process for a specified resource.

11. The electronic device of any one of the preceding claims,
wherein the process for outputting an image to the display is a process of a surface flinger for compositing at least one image stored in a frame buffer.

12. A method executed in an electronic device (101) comprising a display (160), and a processor (120) including a first core (221) running in a first frequency range, and a second core (231) running in a second frequency range having a maximum frequency less than a maximum frequency of the first frequency range, the method comprising,
identifying a request of a first process (310) of an application,
based on a process indicated by the request being related to a process for outputting an image to the display, allocating the first process to the first core for processing, and
based on the process indicated by the request being related to a process other than a process for outputting an image to the display, maintaining a core currently allocated to the first process as the core for processing the first process.

13. The method of claim 12, comprising:
identifying resources allocated to the first process,
based on identifying that the identified resources are included in resources for the application having the top activity among a plurality of applications, allocating the first process to the first core for processing, and
based on the identified resources being included in resources other than the resources for the application having the top activity, maintaining the core currently allocated to the first process as the core for processing the first process.

14. The method of claim 12, comprising:
identifying a thread of the first process that generates the request,
based on identifying that the thread is a thread other than a main thread of the first process, allocate the thread of the first process to the first core for processing, and
based on identifying that the thread is the main thread of the first process, maintaining the core currently allocated to the main thread of the first process for processing the thread of the first process.

15. A computer program which, when executed by a processor, is arranged to perform a method according to any one of claims 12 to 14.
